# EUROPEAN PATENT APPLICATION

(11) **EP 4 760 906 A1**
(43) Date of publication of application: **17.06.2026**
(21) Application number: 24953258.1
(22) Date of filing: 25.10.2024
(51) Int. Cl.: H01M 50/204

(54) **BATTERY CASE AND BATTERY PACK**

(30) Priority: 05.09.2024 CN 202422185057 U
(71) Applicant: Eve Energy Co., Ltd., Huizhou, Guangdong 516006 (CN)
(72) Inventor: YAN, Huaping, Huizhou, Guangdong 516006 (CN); ZHOU, Hongquan, Huizhou, Guangdong 516006 (CN)
(74) Representative: Herrero & Asociados, S.L.
(86) International application number: PCT/CN2024/127464
(87) International publication number: WO 2026/051167

(57) **Abstract**

A battery case and a battery pack are provided. The battery case includes a top cover, a case body, and a pressing frame. The case body and the top cover cooperatively define an accommodating space configured to accommodate a battery module. The pressing frame is connected to the case body. At least a portion of the pressing frame abuts against a top portion of the battery module and presses the battery module toward a bottom portion of the case body.

## Description

This application claims the priority of Chinese Patent Application No. 2024221850575, filed to the China National Intellectual Property Administration on September 5, 2024, the disclosure of which is hereby incorporated by reference in their entireties into the present application.

### TECHNICAL FIELD

The present disclosure relates to the technical field of batteries, and particularly to a battery case and a battery pack.

### BACKGROUND

In related art, a vertical constraint for a battery is generally achieved by defining an opening in a bottom blue film of a battery pack and using adhesive to connect a bottom aluminum shell of a battery cell to a tray case, or by directly adhering the bottom blue film of the battery pack to the tray case.

### SUMMARY

### Technical Problem

The above method has shortcomings as follows. A battery pack film process is complex, and uniformity of an adhesive thickness is poor, necessitating additional measures to control the adhesive thickness, which increases manufacturing costs. Additionally, an interface formed by the battery-blue film-adhesive-tray case provides weak vertical constraint, failing to meet demands of complex and harsh working conditions.

Thus, in the related art, vertical constraint performance of the battery pack is insufficient.

### Technical Solution

In a first aspect, the present disclosure provides a battery case. The battery case includes a top cover, a case body, and a pressing frame. The case body and the top cover cooperatively define an accommodating space configured to accommodate a battery module. The pressing frame is connected to the case body. At least a portion of the pressing frame abuts against a top portion of the battery module and presses the battery module toward a bottom portion of the case body.

**In** a second aspect, the present disclosure provides a battery pack, including a battery module and the battery case described in the first aspect. The battery module is housed in the battery case.

### Beneficial Effects

The beneficial effects of the present disclosure are as follows. In the present disclosure, the battery case includes the top cover, the case body, and the pressing frame. The case body and the top cover cooperatively define an accommodating space to accommodate the battery module, and the pressing frame is connected to the case body. At least a portion of the pressing frame abuts against the top portion of the battery module and presses the battery module toward the bottom portion of the case body. As the pressing frame abuts against the battery module, a force transmission path for the vertical constraint in the battery pack is increased, thus, a certain proportion of vertical stress is born by the pressing frame, achieving effective vertical constraint for the battery pack in the battery case. Additionally, under a pressing action of the pressing frame, a thickness of a structural adhesive layer between the battery module and the case body can be maintained with good consistency, ensuring uniform temperature distribution in the battery pack and normal operation of the battery pack, addressing the issue of poor vertical constraint effects in the related art.

### BRIEF DESCRIPTION OF THE DRAWINGS

**FIG.** 1 is a structural view of a battery case according to some embodiments of the present disclosure.
FIG. 2 is an exploded view of a battery pack according to some embodiments of the present disclosure.
FIG. 3 is a structural view of a pressing frame according to some embodiments of the present disclosure.
FIG. 4 is a structural view of the battery case with a top cover removed, from one angle.
FIG. 5 is a structural view of the battery case with the top cover removed, from another angle.
FIG. 6 is a cross-sectional view taken at A-A in FIG. 5.
FIG. 7 is a cross-sectional view taken at B-B in FIG. 5.
FIG. 8 is a structural view of an electrical device according to some embodiments of the present disclosure.

The drawings include the following numeral reference:
10: top cover; 20: case body; 30: pressing frame; 31: edge connection part; 32: middle limiting part; 321: frame; 322: first pressing strip; 323: second pressing strip; 40: battery module; 41: battery cell group; 411: battery cell; 4111: terminal; 50: structural adhesive layer; 100: battery pack; 1000: electrical device.

### EMBODIMENTS OF THE PRESENT DISCLOSURE

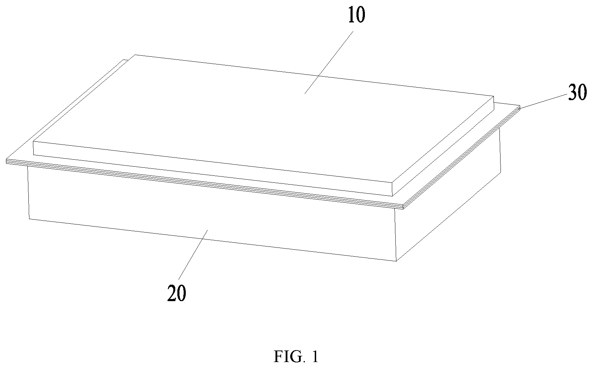

As shown in FIGS. 1-2, 4, and 6-7, a battery case includes a top cover 10, a case body 20, and a pressing frame 30. The case body 20 and the top cover 10 cooperatively define an accommodating space configured to accommodate a battery module 40. The pressing frame 30 is connected to the case body 20, and at least a portion of the pressing frame 30 abuts against a top portion of the battery module 40 and presses the battery module 40 toward a bottom portion of the case body 20.

In the present disclosure, the battery case includes the top cover 10, the case body 20, and the pressing frame 30. The case body 20 and the top cover 10 cooperatively define the accommodating space to accommodate the battery module 40, and the pressing frame 30 is connected to the case body 20. At least a portion of the pressing frame 30 abuts against the top portion of the battery module 40 and presses the battery module 40 toward the bottom portion of the case body 20. As the pressing frame 30 abuts against the battery module 40, a force transmission path for a vertical constraint in a battery pack is increased, and thus, a certain proportion of vertical stress is born by the pressing frame 30, achieving effective vertical constraint for the battery pack in the battery case. Additionally, under a pressing action of the pressing frame 30, a thickness of a structural adhesive layer between the battery module 40 and the case body 20 can be maintained with good consistency, ensuring uniform temperature distribution in the battery pack and normal operation of the battery pack.

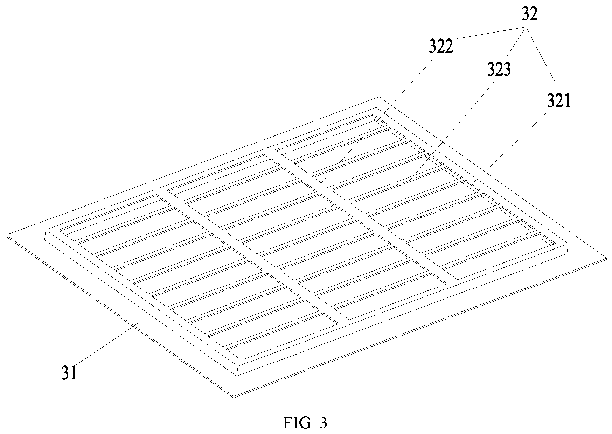

As shown in FIG. 3, the pressing frame 30 includes an edge connection part 31 and a middle limiting part 32. The edge connection part 31 is connected to the case body 20. The middle limiting part 32 has an avoidance gap for the battery module 40 and abuts against the top portion of the battery module 40. It is understandable that each battery cell 411 in the battery module 40 is arranged with a terminal 4111 at a top portion of the each battery cell 411. The terminal 4111 is configured to electrically connect to a conductive sheet to power an external device. Therefore, while abutting against and pressing the battery module 40 downward, the pressing frame 30 should avoid interfering with the terminal 4111.

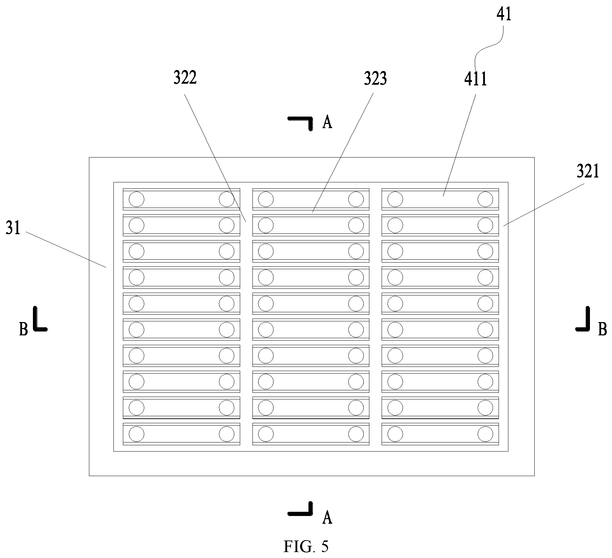

As shown in FIGS. 3-7, the middle limiting part 32 includes a frame 321. The frame 321 forms the avoidance gap and abuts against the top portion of the battery module 40.

In this embodiment, the frame 321 protrudes from the edge connection part 31 and forms a receiving recess. The receiving recess is communicated to the avoidance gap. At least a portion of the battery module 40 is housed in the receiving recess. In other words, the pressing frame 30 in this embodiment is placed over the battery module 40, ensuring better abutting with the battery module 40 and downward pressing the battery module 40. The frame 321 protruding from the edge connection part 31 has four sidewalls. The four sidewalls face each other in pairs and cooperatively surround an upper portion of the battery module 40. Furthermore, a top portion of the frame 321 has a circumferential limiting edge extending inwards. The circumferential limiting edge abuts against the top portion of the battery module 40. By providing the circumferential limiting edge, the frame 321 can uniformly contact the battery module 40 in a circumferential direction, allowing the frame 321 to evenly exert downward pressure on the battery module 40 in a vertical direction, ensuring uniform transmission of a vertical force and preventing deviations in a pressing force. Consequently, the structural adhesive layer 50 between the battery module 40 and the case body 20 can maintain good thickness consistency, thus ensuring the temperature uniformity of the battery pack.

It is understandable that the circumferential limiting edge forms the avoidance gap, and an area of the avoidance gap is smaller than an area of a top face of the battery module 40.

In this embodiment, the edge connection part 31 is in a shape of a rectangular ring, and a bottom portion of the frame 321 is connected to an inner periphery edge of the edge connection part 31. Correspondingly, the case body 20 also has a periphery connecting edge in a shape of the rectangular ring at a top opening of the case body 20 to connect with the edge connection part 31. Specifically, the edge connection part 31 is connected to the case body 20 by welding or bonding. Other connection methods may also be used as needed between the edge connection part 31 and the case body 20.

In this embodiment, the frame 321 is connected to the edge connection part 31 by welding. Alternatively, the frame 321 and the edge connection part 31 may be integrally formed as a one-piece structure to enhance structural strength.

As shown in FIGS. 3-7, the middle limiting part 32 also includes a first pressing strip 322. The first pressing strip 322 extends in a first direction. Each of two ends of the first pressing strip 322 is connected to a respective one of two opposite sides of the frame 321. The first direction is an arrangement direction of battery cells 411 in a battery cell group 41 of the battery module 40. Namely, an extending direction of the first pressing strip 322 is the same as the arrangement direction of the battery cells 411 in the battery cell group 41. There is at least one first pressing strip 322, and each first pressing strip 322 is located between two adjacent battery cell groups 41 of the battery module 40, and the two adjacent battery cell groups 41 correspond to the each first pressing strip 322. Specifically, each first pressing strip 322 corresponds to terminals 4111 of the two adjacent battery cell groups 41 in a horizontal direction. By providing the at least one first pressing strip 322, the middle limiting part 32 can abut against an inner side of the top portion of the battery module 40, allowing for a more uniform downward pressure on the battery module 40, ensuring uniform transmission of the vertical force and preventing deviations in the pressing force. Consequently, the thickness of the structural adhesive layer 50 can maintain good consistency, ensuring the temperature uniformity of the battery pack.

When there are a plurality of first pressing strips 322, the plurality of first pressing strips 322 are spaced apart from each other in a second direction to enhance pressure uniformity.

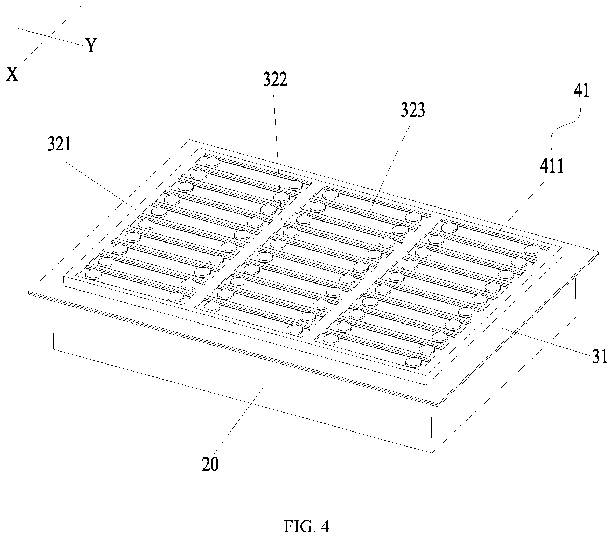

Specifically, with reference to FIG. 4, the battery module 40 includes three battery cell groups 41, and correspondingly, there are two first pressing strips 322. One of the two first pressing strips 322 is located between a first battery cell group and a second battery cell group, and the other of the two first pressing strips 322 is located between the second battery cell group and the third battery cell group. The circumferential limiting edge includes four segments on two opposite long sides and two opposite short sides of the frame 321. Specifically, each of the four segments corresponds to one of the two opposite long sides or one of the two opposite short sides. The two first pressing strips 322 are connected to two segments of the circumferential limiting edge corresponding to the two opposite long sides. Actually, two segments of the circumferential limiting edge corresponding to the two opposite short sides of the frame 321 have the same function as the first pressing strips 322 and can also be considered as first pressing strips 322.

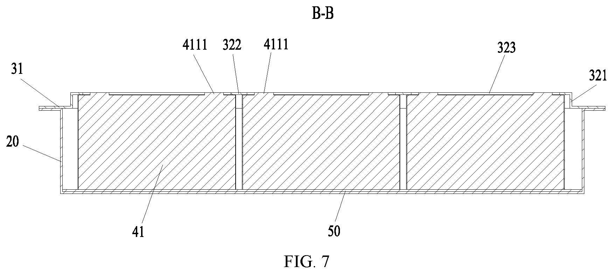

A width of the each first pressing strip 322 is greater than a spacing between the two adjacent battery cell groups 41 correspond to the each first pressing strip 322, ensuring that the each first pressing strip 322 abuts against an end of the two adjacent battery cell groups 41, as shown in FIG. 7. Additionally, a contact area between the each first pressing strip 322 and an end of one of the two adjacent battery cell groups 41 is the same as a contact area between the each first pressing strip 322 and an end of the other of the two adjacent battery cell groups 41. In other words, each first pressing strip 322 is located at a middle position between the two adjacent battery cell groups 41 in the battery module 40. Through this configuration, each battery cell group 41 and battery cells 411 in the each battery cell group 41 can be pressed by the pressing frame 30, ensuring uniform transmission of the vertical force and preventing deviations in the pressing force, thereby maintaining consistent thickness of the structural adhesive layer 50 and ensuring temperature consistency within the battery pack.

In this embodiment, as shown in FIGS. 3 to 7, the middle limiting part 32 further includes a second pressing strip 323. The second pressing strip 323 extends in the second direction. One of two ends of the second pressing strip 323 is connected to the frame 321, and the other of the two ends of the second pressing strip 323 is connected to a corresponding first pressing strip 322. Or, each of the two ends of the second pressing strip 323 is connected to a respective one of two adjacent first pressing strips 322, with the two adjacent first pressing strips 322 corresponding to the second pressing strip 323. There are a plurality of second pressing strips 323. Each second pressing strip 323 is located between two adjacent battery cells 411 of a respective one battery cell group 41, with the two adjacent battery cells 411 corresponding to the each second pressing strip 323. Specifically, each second pressing strip 323 corresponds to terminals 4111 of the two adjacent battery cells 411 in the horizontal direction.

Further, each of the first pressing strip 322 and the second pressing strip 323 is lower than top faces of the terminals 4111 in the vertical direction to avoid interference with an electrical connection of the terminals 4111.

In this embodiment, the second direction is perpendicular to the first direction. Specifically, as shown in FIG. 4, an X direction is the first direction, and a Y direction is the second direction.

Specifically, corresponding to the three battery cell groups 41, in this embodiment, the middle limiting part 32 includes three groups of second pressing strips 323. Additionally, in this embodiment, each battery cell group 41 includes ten battery cells 411, and thus each group of second pressing strips 323 includes nine second pressing strips 323. Each second pressing strip 323 is located between two adjacent battery cells 411 in a respective battery cell group 41, with the two adjacent battery cells 411 corresponding to the each second pressing strip 323. In fact, two segments of the circumferential limiting edge corresponding to the two opposite long sides of the frame 321 have the same function as the second pressing strips 323 and can also be considered as second pressing strips 323.

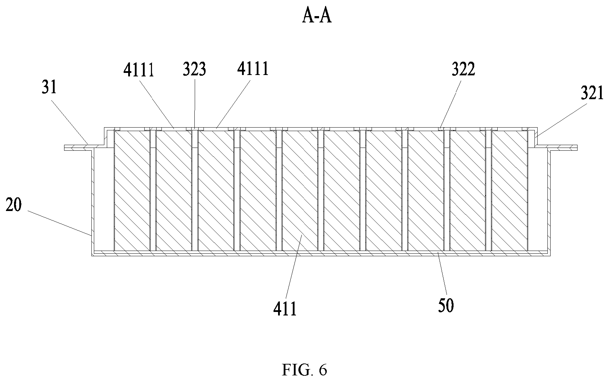

In this embodiment, a width of the each second pressing strip 323 is greater than a spacing between the two adjacent battery cells 411 of a respective battery cell group 41, with the two adjacent battery cells 411 corresponding to the each second pressing strip 323. In this way, the each second pressing strip 323 abuts against sides of the two adjacent battery cells 411 of the respective battery cell group 41, as shown in FIG. 6. Furthermore, a contact area of the each second pressing strip 323 with one of the two adjacent battery cells 411 of the respective battery cell group 41 is the same as a contact area of the each pressing strip 323 with the other of the two adjacent battery cells 411 of the respective battery cell group 41. In other words, the each second pressing strip 323 is positioned in an exact middle position between the two adjacent battery cells 411 of the respective battery cell group 41. Through the above configuration, each battery cell group 41 and battery cells 411 in the each battery cell group 41 can be pressed down by the pressing frame 30, ensuring uniform transmission of the vertical force and preventing deviations in the pressing force, thereby enabling the structural adhesive layer 50 to maintain good thickness consistency and ensuring the temperature uniformity of the battery pack.

It can be understood that the first pressing strips 322 and the second pressing strips 323 in this embodiment are arranged in a crisscross manner, forming a grid structure, with each grid of the grid structure corresponding to one battery cell 411. For a single battery cell 411, each end is pressed down by a corresponding first pressing strip 322 or a segment of the circumferential limiting edge corresponding to a short side of the frame 321, with the short side of the frame 321 corresponding to the single battery cell 411; each side is pressed down by a corresponding second pressing strip 323 or a segment of the circumferential limiting edge corresponding to a long side of the frame 321, with the long side of the frame 321 corresponding to the single battery cell 411. That is to say, a top periphery of each battery cell 411 is abutted against and pressed down by the pressing frame 30. Through the above configuration, uniform transmission of the vertical force can be ensured, and deviations in the pressing force can be prevented, thereby enabling the structural adhesive layer 50 to maintain good thickness consistency and ensuring the temperature uniformity of the battery pack.

In this embodiment, the first pressing strips 322 and the second pressing strips 323 are connected to the frame 321 and to each other by welding. Furthermore, the first pressing strips 322 and the second pressing strips 323 can also be integrally formed with the frame 321 as a one-piece structure, that is, the entire middle limiting part 32 is an integrally formed and one-piece component, thereby improving the structural strength. Using the above integral forming method, the grid structure can be directly cut and processed corresponding to each battery cell 411, which is convenient and fast.

In this embodiment, a ratio of a height of the pressing frame 30 to a height of the battery module 40 is less than or equal to 90%. It can be understood that the height of the battery module 40 is adapted to an overall height of the pressing frame 30 and the case body 20. When the height of the pressing frame 30 is large, a height of the case body 20 can be correspondingly reduced. It can be understood that the pressing frame 30 cannot replace the case body 20. To ensure a firm connection between the pressing frame 30 and the case body 20 and overall structural strength, the height of the case body 20 should not be too small, that is, the height of the pressing frame 30 should not be too large. Therefore, the ratio of the height of the pressing frame 30 to the height of the battery module 40 needs to be less than or equal to 90%.

In an optional embodiment, the frame 321 and the edge connecting part 31 are configured as a flat plate which is integrally formed as a one-piece structure. That is to say, the frame 321 in this embodiment does not protrude from the edge connecting part 31, meaning the pressing frame 30 is a flat plate structure. The avoidance gap or the grid structure can be directly formed in a middle position of the pressing frame 30, allowing the pressing frame 30 to be laid flat on the battery module 40 and abut against the top portion of the battery module 40. The pressing frame 30 in this embodiment has a simple structure, which can reduce material usage and save manufacturing costs.

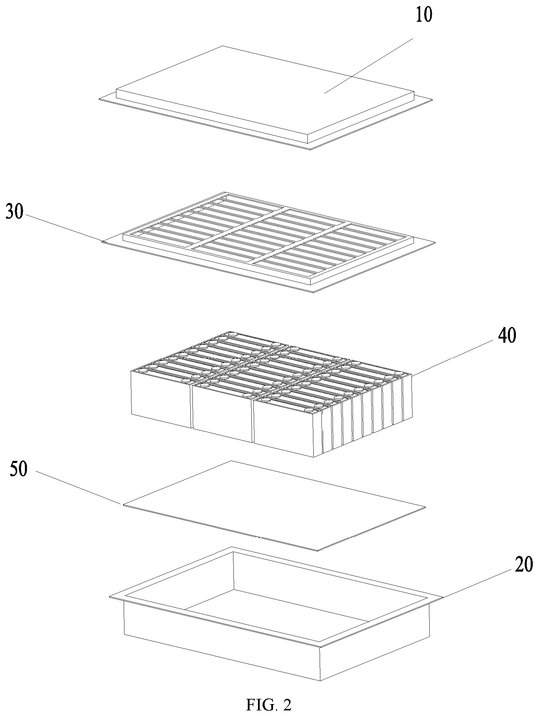

As shown in FIG. 2, the present disclosure also provides a battery pack. The battery pack includes a battery module 40 and the above-mentioned battery case. The battery module 40 is accommodated in the battery case.

As shown in FIGS. 2, 6, and 7, the battery pack further includes a structural adhesive layer 50. The structural adhesive layer 50 is disposed between the battery module 40 and an inner bottom face of the case body 20 and is configured to bond and fix the battery module 40. By using the battery case in this embodiment, through a downward pressing action of the pressing frame 30, a thickness of the structural adhesive layer 50 between the battery module 40 and the case body 20 can maintain good consistency, ensuring temperature uniformity of the battery pack, and thereby ensuring normal use of the battery pack.

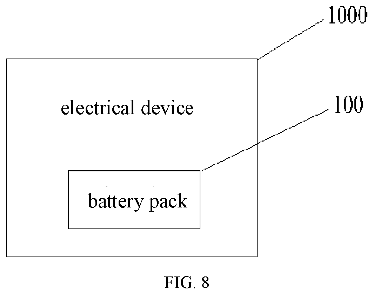

As shown in FIG. 8, the present disclosure further provides an electrical device 1000. The electrical device 1000 includes the above-mentioned battery pack 100. The battery pack 100 described in the embodiments of the present disclosure is applicable to various electrical devices 1000 that use the battery pack 100. Specifically, the electrical device 1000 can be a mobile phone, portable device, laptop computer, vehicle, ship, spacecraft, electric toy, and power tool, etc. The embodiments of the present disclosure do not impose special limitations on the above-mentioned electrical device 1000.

From the above description, it can be seen that the above-mentioned embodiments of the present disclosure achieve the following technical effects. In the present disclosure, the battery case includes the top cover 10, the case body 20, and the pressing frame 30. The case body 20 and the top cover 10 cooperatively define the accommodating space to accommodate the battery module 40, and the pressing frame 30 is connected to the case body 20. At least a portion of the pressing frame 30 abuts against the top portion of the battery module 40 and presses the battery module 40 toward the bottom portion of the case body 20. As the pressing frame 30 abuts against the battery module 40, a force transmission path for a vertical constraint in a battery pack is increased, and thus, a certain proportion of vertical stress is born by the pressing frame 30, achieving effective vertical constraint for the battery pack in the battery case. Additionally, under a pressing action of the pressing frame 30, a thickness of a structural adhesive layer between the battery module 40 and the case body 20 can be maintained with good consistency, ensuring uniform temperature distribution in the battery pack and normal operation of the battery pack.

## Claims

1. A battery case, comprising:
a top cover (10);
a case body (20), wherein the case body (20) and the top cover (10) cooperatively define an accommodating space configured to accommodate a battery module (40); and
a pressing frame (30), connected to the case body (20), wherein at least a portion of the pressing frame (30) abuts against a top portion of the battery module (40) to press the battery module (40) toward a bottom portion of the case body (20).

2. The battery case according to claim 1, wherein the pressing frame (30) comprises:
an edge connection part (31), connected to the case body (20); and
a middle limiting part (32), defining an avoidance gap for the battery module (40) and abutting against the top portion of the battery module (40).

3. The battery case according to claim 2, wherein the middle limiting part (32) comprises a frame (321) and at least one first pressing strip (322);
the frame (321) forms the avoidance gap and abuts against the top portion of the battery module (40);
the at least one first pressing strip (322) extends in a first direction, each of two ends of the at least one first pressing strip (322) is connected to a respective one of two opposite sides of the frame (321), the first direction is an arrangement direction of more than one battery cell (411) in each of more than one battery cell group (41), and each of the at least one first pressing strip (322) is located between two adjacent battery cell groups (41) of the more than one battery cell group (41) of the battery module (40), the two adjacent battery cell groups (41) corresponding to the each of the at least one first pressing strip (322).

4. The battery case according to claim 3, wherein a width of the each of the at least one first pressing strip (322) is greater than a spacing between the two adjacent battery cell groups (41), and the each of the at least one first pressing strip (322) abuts against an end of each of the two adjacent battery cell groups (41).

5. The battery case according to claim 3, wherein the middle limiting part (32) further comprises a plurality of second pressing strips (323), the plurality of second pressing strips (323) extend in a second direction, and the second direction is perpendicular to the first direction;
each of the plurality of second pressing strips (323) has two ends, one of the two ends is connected to the frame (321), and the other of the two ends is connected to the at least one first pressing strip (322); or the number of the at least one first pressing strip (322) is more than one, and each of the two ends is connected to a respective one of two adjacent first pressing strips (322) from the more than one first pressing strip (322), the two adjacent first pressing strips (322) corresponding to the each of the plurality of second pressing strips (323);
each of the plurality of second pressing strips (323) is located between two adjacent battery cells (411) of the more than one battery cell (411) in a respective one of the more than one battery cell group (41), the two adjacent battery cells (411) corresponding to the each of the plurality of second pressing strips (323).

6. The battery case according to claim 5, wherein a width of the each of the plurality of second pressing strips (323) is greater than a spacing between the two adjacent battery cells (411), and each of the plurality of second pressing strips (323) abuts against a side of each of the two adjacent battery cells (411).

7. The battery case according to claim 3, wherein the frame (321) protrudes from the edge connection part (31) and forms a receiving recess communicated to the avoidance gap, and at least a portion of the battery module (40) is housed in the receiving recess;
the frame (321) is arranged with a circumferential limiting edge extending inward at a top portion of the frame (321), and the circumferential limiting edge abuts against the top portion of the battery module (40).

8. The battery case according to claim 7, wherein a ratio of a height of the pressing frame (30) to a height of the battery module (40) is less than or equal to 90%.

9. The battery case according to claim 3, wherein the frame (321) and the edge connection part (31) are configured as a flat plate which is integrally formed as a one-piece structure.

10. A battery pack, comprising a battery module (40) and the battery case according to any one of claims 1-9, wherein the battery module (40) is housed in the battery case.
